# EUROPÄISCHE PATENTSCHRIFT

(11) **EP 3 971 127 B1**
(45) Veröffentlichungstag und Bekanntmachung des Hinweises auf die Patenterteilung: **17.04.2024**
(21) Anmeldenummer: 21189557.8
(22) Anmeldetag: 04.08.2021
(51) Int. Cl.: B66F 9/075, B66F 9/20, B60K 26/02, B60T 7/10, G05G 9/047, B60T 7/08

(54) **VERFAHREN ZUR FAHRZEUGFÜHRUNG EINER MOBILEN ARBEITSMASCHINE UND MOBILE ARBEITSMASCHINE**
MOBILE WORKING MACHINE AND VEHICLE GUIDANCE METHOD FOR A MOBILE WORKING MACHINE
PROCÉDÉ DE CONDUITE DE VÉHICULE D'UN ENGIN DE TRAVAUX PUBLICS MOBILE ET ENGIN DE TRAVAUX PUBLICS MOBILE

(30) Priorität: 17.09.2020 DE 102020124244
(43) Veröffentlichungstag der Anmeldung: 23.03.2022
(73) Patentinhaber: STILL GmbH, 22113 Hamburg (DE); Linde Material Handling GmbH, 63743 Aschaffenburg (DE)
(72) Erfinder: HOWEY, Ansgar, 22926 Ahrensburg (DE); RAUSCH, Johannes, 63773 Goldbach (DE)
(74) Vertreter: Patentship Patentanwaltgesellschaft

(56) Entgegenhaltungen:
- EP-A1- 3 561 635
- DE-A1- 10 204 742
- DE-A1-102018 116 995
- GB-A- 2 485 225

## Beschreibung

Die Erfindung betrifft ein Verfahren zur Fahrzeugführung einer mobilen Arbeitsmaschine, insbesondere eines Flurförderzeugs, mittels eines mindestens einachsigen, mit der Hand des Fahrers bewegbaren, Steuerknüppels, wobei mit einer Bewegung des Steuerknüppels in einer Betätigungsrichtung Zielwerte für Fahrtrichtung und Fahrgeschwindigkeit der mobilen Arbeitsmaschine vorgegeben werden.

Außerdem betrifft die Erfindung eine mobile Arbeitsmaschine, insbesondere ein Flurförderzeug, zur Durchführung des Verfahrens.

Zum Lenken einer mobilen Arbeitsmaschine, beispielsweise eines Flurförderzeugs mit einem Fahrerarbeitsplatz, insbesondere eines Gabelstaplers mit einer Fahrerkabine und einem darin angeordneten Fahrersitz, benutzt der Fahrer beim heutigen Stand der Technik ein Lenkrad, angeordnet in einer klassischen Position bevorzugt mittig vor dem Fahrersitz. Bekannt sind auch Lenkräder kleinerer Bauart. Hierzu gehört zum Beispiel ein so genanntes Mini-Lenkrad, welches an der linken Armlehne des Fahrersitzes montiert ist.

Eine Bedieneinheit zum Lenken, integriert in die linke Armlehne und damit in einer Einheit mit dem Fahrersitz, ist ein Bestandteil zur Umsetzung einer Bauform eines Gabelstaplers mit einem Drehsitz. Der zweite Bestandteil sind korrelierend zum Drehwinkel des Fahrersitzes mitdrehende Pedale für das Beschleunigen, Fahren und Bremsen des Gabelstaplers. Hier gestaltet sich die ergonomische Umsetzung jedoch deutlich aufwendiger, da ein Mitdrehen der Pedalposition mit dem Fahrersitz konstruktiv aufwendig ist und die zusätzliche Anbringung von Pedalen für eine gedrehte Position des Sitzes häufig an Platzmangel in der Fahrerkabine des Gabelstaplers scheitert. Daher gibt es hierfür nur wenige marktgängige Lösungen.

Aus der DE 10 2018 116 995 A1 ist ein Flurförderzeug mit einem Fahrersitz und mindestens einer am Fahrersitz angeordneten Bedieneinrichtung zur Steuerung des Flurförderzeugs bekannt, bei dem die Lenk- und Fahrbedienelemente in derselben Bedieneinrichtung zusammengefasst sind. Damit kann eine ergonomisch günstige Voraussetzung für eine Veränderbarkeit der Fahrerposition, insbesondere bei einer Drehung des Fahrersitzes, z.B. für ein Rückwärtsfahren des Flurförderzeugs, geschaffen werden. Auf diese Weise kann die am Fahrersitz angeordnete Bedieneinrichtung einfach mit dem Fahrersitz mitgedreht werden, so dass sowohl das Lenken als auch das Fahren, also das Beschleunigen, Fahren und Bremsen, in jeder Position des Fahrersitzes und somit des Fahrers ergonomisch möglich sind. Dabei ist die Bedienungseinrichtung insbesondere für eine händische Bedienung durch den Fahrer ausgelegt. Hierzu ist die Bedieneinrichtung an einer Armlehne des Fahrersitzes angeordnet. Dadurch wird das Fahren eines Flurförderzeuges durch den Fahrer ohne die Benutzung der Füße ermöglicht. Dies erleichtert die Realisierung der Bauform des Flurförderzeuges mit einem Drehsitz erheblich, weil kein zusätzlicher Platzbedarf im Fußraum für Pedale zur Steuerung des Fahrantriebs erforderlich ist. Zudem wird mit einer Bedieneinrichtung, bei dem die Lenk- und Fahrbedienelemente in derselben Bedieneinrichtung zusammengefasst sind, bei Flurförderzeugen mit einer Standplattform eine einfache Bedienung der Fahrfunktion und der Lenkfunktion ermöglicht.

Die DE 102 04 742 A1 offenbart ein Flurförderzeug, bei dem zur Steuerung des Fahrantriebs, der Lenkanlage und der Bremsanlage ein gemeinsamer Joystick vorgesehen ist.

Die EP 3 561 635 A1 offenbart ein Fahrzeug, bei dem zur Steuerung der Lenkung, des Antriebsstrangs und der Bremse ein Joystick vorgesehen ist.

Für eine händische Bedienung durch den Fahrer ausgelegte Bedieneinrichtungen können auch als mindestens ein- oder zweiachsige Steuerknüppel ausgebildet sein. Solche Steuerknüppel werden im Allgemeinen als sogenannte einachsige oder zweiachsige Joysticks bezeichnet.

Bei der Fahrzeugführung mittels eines beispielsweise an einer Armlehne des Fahrersitzes montierten einachsigen Steuerknüppels können mit Bewegungen, also Auslenkungen des Steuerknüppels, in der Betätigungsrichtung Zielwerte für die Fahrtrichtung und Fahrgeschwindigkeit vorgegeben werden. Bei der Fahrzeugführung mittels eines beispielsweise an einer Armlehne des Fahrersitzes montierten zweiachsigen Steuerknüppels können mit Bewegungen, also Auslenkungen des Steuerknüppels, in der Längsrichtung Zielwerte für die Fahrtrichtung und Fahrgeschwindigkeit und mit Bewegungen in der Querrichtung ein Zielwert für den Lenkwinkel des Fahrzeugs vorgegeben werden. Das Fahrzeug beschleunigt auf den vorgegebenen Zielwert beziehungsweise wird bei elektrischen Antriebssystemen mit einem elektrischen Fahrantrieb, insbesondere generatorisch, abgebremst. Dabei kommt jedoch nicht die Betriebsbremse, beispielsweise eine mechanisch wirkende Betriebsbremse, des Fahrzeugs zum Einsatz. Diese kann, wie meistens üblich, mittels eines Bremspedals bei Bedarf betätigt werden. Ebenso bekannt ist die Nutzung einer elektrisch oder hydraulisch aktuierten Parkbremse als Notbremse, um im Fall einer Funktionsstörung das Fahrzeug sicher zum Halt zu bringen. Eine Nutzung dieser Parkbremse als Betriebsbremse ist ebenso bekannt. Die Auslösung dieser Funktion erfolgt dabei über eine dafür vorgesehene Taste oder einen Fußschalter, der zum Beispiel losgelassen werden muss.

Im laufenden Betrieb einer, insbesondere elektrisch angetriebenen, mit einem elektrischen Fahrantrieb ausgestatteten mobilen Arbeitsmaschine wird die mechanische Betriebsbremse aufgrund der Möglichkeit des generatorischen Bremsens mittels des elektrischen Fahrantriebs meistens nicht benötigt, sie ist jedoch für eine funktional sichere und für eine Abbremsung mit einem nach Norm IS06292 vorgeschriebenen Bremsweg weiterhin notwendig. Die dafür nötigen Komponenten der Bremsbetätigung müssen im Fahrzeug vorgesehen werden und sind gegebenenfalls im Weg. Insbesondere bei Fahrzeugen mit einem drehbaren Fahrersitz ist ein Mitdrehen des mechanischen oder hydraulischen Bremspedals mit hohem Aufwand verbunden.

Der vorliegenden Erfindung liegt die Aufgabe zugrunde, ein Verfahren der eingangs genannten Art sowie eine mobile Arbeitsmaschine so auszugestalten, dass eine Abbremsung der mobilen Arbeitsmaschine mit der mechanischen Betriebsbremse auch bei gedrehtem Fahrersitz oder einer Arbeitsmaschine mit einer Standplattform auf ergonomisch günstige Weise ermöglicht wird.

Diese Aufgabe wird verfahrensseitig erfindungsgemäß dadurch gelöst, dass mit einer vordefinierten Bremsbefehl-Bewegung des Steuerknüppels in die der aktuellen Fahrtrichtung entgegengesetzten Richtung bis zur maximal möglichen Auslenkung des Steuerknüppels eine als Betriebsbremse definierte mechanische Bremsfunktion eingeleitet wird Der Steuerknüppel wird also mit einer vordefinierten Bremsbefehl-Bewegung über eine Neutralstellung hinaus bis zu einer definierten Auslenkung soweit wie möglich bis zu einem Endanschlag des Steuerknüppels in die der aktuellen Fahrtrichtung entgegengesetzten Richtung bewegt, um die Betriebsbremse und somit die Betriebsbremsfunktion auszulösen.

Hierzu kann beispielsweise eine elektrisch oder hydraulisch betätigte Parkbremse als Betriebsbremse und somit als mechanische Bremsfunktion genutzt werden, wobei die Parkbremse mit der vordefinierten Bremsbefehl-Bewegung des Steuerknüppels ausgelöst wird.

Dabei liegt der Erfindung die Überlegung zu Grunde, dass das Bremspedal der mechanischen Betriebsbremse entfallen kann, wenn eine Möglichkeit geschaffen wird, mit dem Steuerknüppel die elektrisch oder hydraulisch betätigte Parkbremse als Betriebsbremse zu nutzen und somit die Betriebsbremse mittels des Steuerknüppels zu betätigen. Im normalen Betrieb kann der Steuerknüppel, um zu bremsen, in die der aktuellen Fahrtrichtung entgegengesetzte Richtung oder in die Neutralstellung bewegt werden, wodurch eine generatorische (elektrische) Bremsung mittels des elektrischen Fahrantriebs eingeleitet wird. Um die als Betriebsbremse definierte mechanische Bremsfunktion auszuführen, die funktional sicher und mit ausreichend kurzem Bremsweg erfolgt, wird der Griff des Steuerknüppels mit einer vordefinierten Bremsbefehl-Bewegung zu der definierten Auslenkung komplett in die der aktuellen Fahrtrichtung entgegengesetzten Richtung, bewegt, wodurch beispielsweise die elektrisch oder hydraulisch betätigte Parkbremse zum Auslösen gebracht wird.

Zweckmäßigerweise wird mit der vordefinierten Bremsbefehl-Bewegung der Fahrantrieb der mobilen Arbeitsmaschine deaktiviert. Außerdem wird mit der vordefinierten Bremsbefehl-Bewegung die als Betriebsbremse

definierte mechanische Bremsfunktion bevorzugt mit maximal möglicher Bremskraft eingeleitet.

Eine andere vorteilhafte Ausgestaltung sieht vor, dass mit der vordefinierten Bremsbefehl-Bewegung die als Betriebsbremse definierte Bremsfunktion mit einer der aktuellen Fahrgeschwindigkeit angepassten Bremskraft eingeleitet wird.

Durch Zurücknahme der Steuerknüppel-Auslenkung nach der vordefinierten Bremsbefehl-Bewegung kann dann die Bremskraft der als Betriebsbremse definierten mechanischen Bremsfunktion variabel eingeregelt werden. Somit kann der Fahrer die Bremskraft gegenüber der maximal möglichen Stärke nach Wunsch einregeln.

Gemäß einer besonders bevorzugten Ausgestaltung der Erfindung umfasst die vordefinierte Bremsbefehl-Bewegung ein Überwinden eines spürbaren Druckpunkts. Um die als Betriebsbremse definierte mechanische Bremsfunktion auszuführen, wird dabei der Griff des Steuerknüppels zu der definierten Auslenkung komplett in die der aktuellen Fahrtrichtung entgegengesetzten Richtung bewegt und ein dort vorhandener deutlich spürbarer Druckpunkt überwunden. Anders als bei einer Auslenkung des Steuerknüppels ohne Überwindung des Druckpunktes erfolgt nach Stillstand des Fahrzeugs kein Reversieren (Beschleunigung in die entgegengesetzte Richtung), sondern das Fahrzeug bleibt solange stehen, bis der Steuerknüppel in die Neutralstellung bewegt wurde. Danach ist der Bremsvorgang beendet und das Fahrzeug kann wieder beschleunigt werden. Alternativ kann der Druckpunkt auch so ausgeführt werden, dass der Steuerknüppel nicht von alleine wieder in die Neutralstellung zurückgeht, sondern der Druckpunkt wieder aktiv überwunden werden muss. Die definierte Auslenkung ist hierbei die maximal mögliche Auslenkung des Steuerknüppels.

Ein weiteres oder alternatives Kriterium für das Auslösen der mechanischen Bremsfunktion und somit der Betriebsbremsfunktion kann die Art und Weise der Bewegung des Steuerknüppels in die entgegengesetzte Richtung sein. Daher ist gemäß einer weiteren vorteilhaften Ausgestaltung der Erfindung vorgesehen, dass die vordefinierte Bremsbefehl-Bewegung eine Bewegung mit vorgegebener Auslenkungsgeschwindigkeit und/oder eine ruckartige Bewegung und/oder eine Bewegung mit vorgegebener Betätigungskraft umfasst.

Zweckmäßigerweise wird mit einer vordefinierten Bremsbefehl-Bewegung des Steuerknüppels in der aktuellen Fahrtrichtung keine Funktion ausgelöst.

Gemäß einer Weiterbildung des Erfindungsgedankens wird mit einer vordefinierten Bremsbefehl-Bewegung des Steuerknüppels in der aktuellen Fahrtrichtung eine Boost-Funktion mit temporär gesteigerter Beschleunigungsleistung der mobilen Arbeitsmaschine ausgelöst.

Wird also insbesondere der Druckpunkt des Steuerknüppels in der Richtung der aktuellen Fahrgeschwindigkeit überwunden, könnte entweder keine Funktion oder die Boostfunktion ausgelöst werden. Eine andere Alternative wäre, dass der Druckpunkt in Richtung der aktuellen Fahrtrichtung deaktiviert wird.

Ferner betrifft die Erfindung eine mobile Arbeitsmaschine, insbesondere ein Flurförderzeug, zur Durchführung eines Verfahrens mit einem mindestens einachsigen, mit der Hand des Fahrers bewegbaren, Steuerknüppel und einer elektronischen Fahrzeugsteuerungseinheit zur Auswertung und Umsetzung von Steuerbefehlen, die durch die Bewegungen des Steuerknüppels auslösbar sind, wobei mit einer Bewegung des Steuerknüppels in einer Betätigungsrichtung Zielwerte für Fahrtrichtung und Fahrgeschwindigkeit vorgebbar sind.

Bei der mobilen Arbeitsmaschine wird die gestellte Aufgabe dadurch gelöst, dass die Fahrzeugsteuerungseinheit dazu eingerichtet ist, bei einer vordefinierten Bremsbefehl-Bewegung des Steuerknüppels in die der aktuellen Fahrtrichtung entgegengesetzten Richtung bis zur maximal möglichen Auslenkung des Steuerknüppels eine als Betriebsbremse definierte mechanische Bremsfunktion und somit eine Betriebsbremsfunktion einzuleiten.

In einer besonders bevorzugten Ausgestaltung der Erfindung ist der Steuerknüppel mit einer Druckpunkt-Funktion ausgestattet, wobei bei Überwinden des Druckpunkts mit der Bremsbefehl-Bewegung in die der aktuellen Fahrtrichtung entgegengesetzten Richtung die Betriebsbremsfunktion auslösbar ist.

Der Steuerknüppel kann als einachsiger Steuerknüppel (Joystick) ausgebildet sein, mit dem nur die Fahrtrichtung und die Fahrtrichtung steuerbar ist. Für das Lenken der Arbeitsmaschine kann ein Lenkrad oder ein weiterer Steuerknüppel (Joystick) eingesetzt werden. Gemäß einer Weiterbildung der Erfindung ist der Steuerknüppel als zweiachsiger, mit der Hand des Fahrers bewegbarer, Steuerknüppel ausgebildet ist, wobei mit einer Bewegung des Steuerknüppels in einer Längsrichtung Zielwerte für Fahrtrichtung und Fahrgeschwindigkeit und mit einer Bewegung des Steuerknüppels in einer Querrichtung ein Zielwert für einen Lenkwinkel der mobilen Arbeitsmaschine vorgegeben werden. Mit einem derartigen zweiachsigen Steuerknüppel können von dem Fahrer mit einer einzigen Hand der Fahrantrieb und der Lenkantrieb der Arbeitsmaschine gesteuert werden.

Die Erfindung bietet eine ganze Reihe von Vorteilen:
Die Erfindung ermöglicht die Bedienung aller Fahrfunktionen inklusive einer mechanischen Bremsfunktion mit einem einzigen Bedienelement. Durch den Wegfall des Bremspedals der mechanischen Bremsfunktion wird die Möglichkeit einer einfachen und ergonomisch sinnvollen Ausführung eines Fahrzeuges mit Fahrer-Drehsitz oder eines Fahrzeugs mit einem Standarbeitsplatz geschaffen. Gegenüber einer Betätigung der mechanischen Bremsfunktion mittels eines Tasters ergibt sich eine deutlich verbesserte Bedienergonomie und intuitivere Bedienung. Die Bedienweise der mechanischen Bremsfunktion entspricht der reflexartigen schnellen und kräftigen Auslenkung des Steuerknüppels in die der Fahrtrichtung entgegengesetzten Richtung.

Weitere Vorteile und Einzelheiten der Erfindung werden anhand der in den schematischen Figuren dargestellten Ausführungsbeispiele näher erläutert. Hierbei zeigen
- Figur 1: eine Seitenansicht einer beispielsweise als Gabelstapler ausgebildeten mobilen Arbeitsmaschine,
- Figur 2: einen Fahrersitz einer mobilen Arbeitsmaschine mit Steuerknüppel und
- Figur 3: eine schematische Darstellung der Bewegungsmöglichkeiten des Steuerknüppels in der Draufsicht.

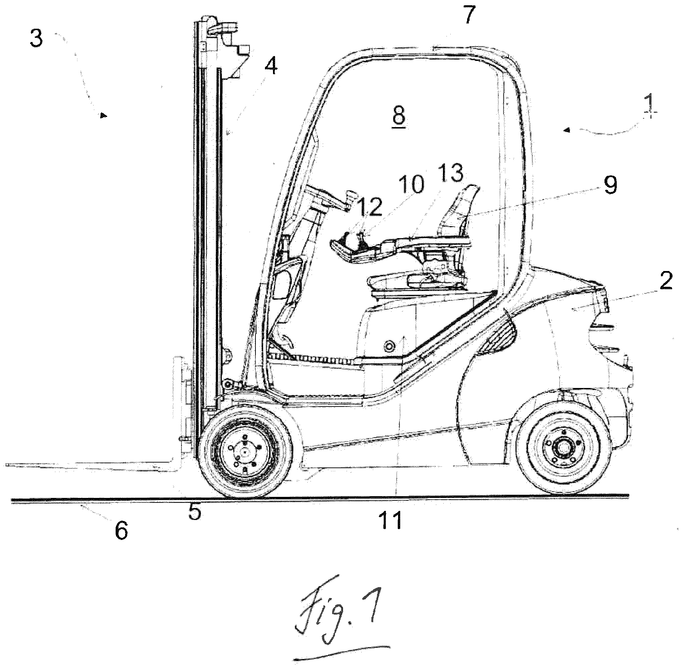

In der Figur 1 ist ein Gegengewichtsgabelstapler als Beispiel einer erfindungsgemäßen mobile Arbeitsmaschine 1 dargestellt.

Die mobile Arbeitsmaschine 1 umfasst einen Antriebsteil 2 und einen Lastteil 3. Der Antriebsteil 2 weist einen Fahrzeugkörper, beispielsweise einen Fahrzeugrahmen, und einen darin untergebrachten - in der Figur 1 nicht näher dargestellten - Fahrantrieb auf. Der Fahrantrieb ist bevorzugt als elektrischer Fahrantrieb ausgebildet.

Der Lastteil 3 wird von einem als Hubmast 4 ausgebildeten Hubgerüst 4 und einem an dem Hubmast 4 mittels eines nicht näher dargestellten Hubantriebs anhebbar- und absenkbar angeordneten Lastaufnahmemittel 5 gebildet. Das Lastaufnahmemittel 5 ist als Lastgabel 5 ausgebildet, die aus zwei Gabelzinken besteht. Die mobile Arbeitsmaschine 1 stützt sich mittels mindestens eines von dem Fahrantrieb angetriebenen Antriebsrades und mindestens eines gelenkten Rades auf einer Fahrbahn 6 ab.

Der Antriebsteil 2 ist mit einem Fahrerschutzdach 7 versehen, innerhalb dessen ein Fahrerarbeitsplatz 8 für eine Bedienperson ausgebildet ist. Der Fahrerarbeitsplatz 8 umfasst einen Fahrersitz 9.

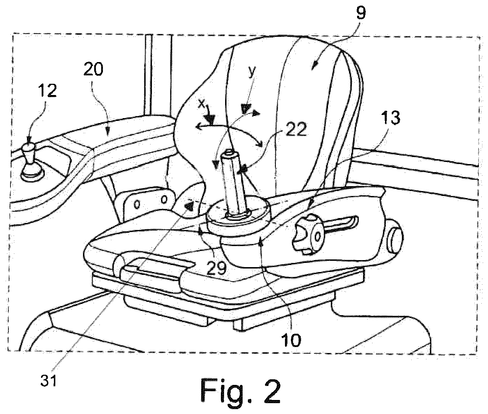

Zur Bedienung der mobilen Arbeitsmaschine 1 ist an einer seitlichen Armlehne 13 des Fahrersitzes 9 ein Steuerknüppel 10 angeordnet. Mittels des Steuerknüppels 10 können im dargestellten Ausführungsbeispiel der Fahrantrieb und eine mechanische Bremsfunktion sowie eine Lenkung der mobilen Arbeitsmaschine 1 gesteuert werden. Die mechanische Bremsfunktion ist bevorzugt von einer mechanisch oder hydraulisch betätigten Bremse, beispielsweise einer Parkbremse, als Betriebsbremse gebildet. Der in Form eines Joysticks ausgebildete Steuerknüppel 10 umfasst einen mit der Hand des Fahrers bewegbaren Handgriff. Die Details des Steuerknüppels 10 sind in der Figur 1 aus Übersichtlichkeitsgründen nicht dargestellt. Eine genaue Darstellung des Steuerknüppels 10 zeigt die Figur 2, die weiter unten beschrieben wird.

Mit dem Steuerknüppel 10 kann der Fahrantrieb der mobilen Arbeitsmaschine 1 und die Lenkung gesteuert werden. Hierzu ist die Fahrzeugsteuerung auf ein Steer-by-Wire-System ausgelegt, bei dem auch die Lenkung elektrisch erfolgt. Zur Übertragung der Steuerungsbefehle vom Steuerknüppel 10 zur mobilen Arbeitsmaschine 1 steht der Steuerknüppel 10 über eine elektronische Datenverbindung mit einer Fahrzeugsteuerungseinheit 11 der mobilen Arbeitsmaschine 1 in Wirkverbindung.

Zur Bedienung der Hauptfunktionen zur Lasthandhabung einer Last durch das Lastaufnahmemittel 5 ist zusätzlich eine Last-Bedieneinrichtung 12 vorgesehen, mit der der Hubantrieb zum Heben und Senken des Lastaufnahmemittels 5, ein Neigeantrieb zum Neigen des Hubmastes 4 und gegebenenfalls vorhandene Zusatzantriebe, beispielsweise eine Seitenschiebereinrichtung zum seitlichen Verstellen des Lastaufnahmemittels 5 in Fahrzeugquerrichtung, gesteuert werden können. Die Last-Bedieneinrichtung 12 umfasst beispielsweise einen oder mehrere Joysticks oder Minihebel, die an der Vorderseite einer zweiten seitlichen Armlehne des Fahrersitzes 9 angeordnet sind. Dabei sind der Steuerknüppel 10 für die Lenk- und Fahrfunktion und die Last-Bedieneinrichtung 12 bevorzugt auf zwei unterschiedlichen Armlehnen angeordnet. Beispielsweise ist der Steuerknüppel 10 für die Lenk- und Fahrfunktion auf der linken Armlehne 13 angebracht, während die Last-Bedieneinrichtung 12 auf der rechten Armlehne des Fahrersitzes 9 angeordnet ist. In der Seitenansicht der Figur 1 ist nur die linke Armlehne 13 zu sehen, während die rechte Armlehne verdeckt ist.

In der Figur 2 ist der Fahrersitz 9 mit dem Steuerknüppel 10 gezeigt. Der Steuerknüppel 10 für die Lenk- und Fahrfunktionen ist an der linken Armlehne 13 des Fahrersitzes 9 angebracht. An der rechten Armlehne 20 ist die Last-Bedieneinrichtung 12 für die Hauptfunktionen zur Lasthandhabung angeordnet. Der Steuerknüppel 10 ist als zweiachsiger Joystick ausgebildet und weist einen Handgriff 22 auf.

Der Handgriff 22 ist um eine erste Achse 29, die in Längsrichtung der Armlehne 13 ausgerichtet ist, in der Querrichtung x schwenkbar, so dass durch Neigen des Handgriffs 22 nach rechts oder links eine entsprechende Schwenkbewegung des Handgriffs 22 bewirkt wird, die in die Lenkbewegung der mobilen Arbeitsmaschine 1 umgesetzt wird. Außerdem ist der Handgriff 22 um eine zweite Achse 31, die in Querrichtung der Armlehne 13 ausgerichtet ist, in der Längsrichtung y schwenkbar, so dass durch Neigen des Handgriffs 22 nach vorne oder hinten eine entsprechende Schwenkbewegung des Handgriffs 22 bewirkt wird, die in die Fahrbewegung der mobilen Arbeitsmaschine 1 umgesetzt wird.

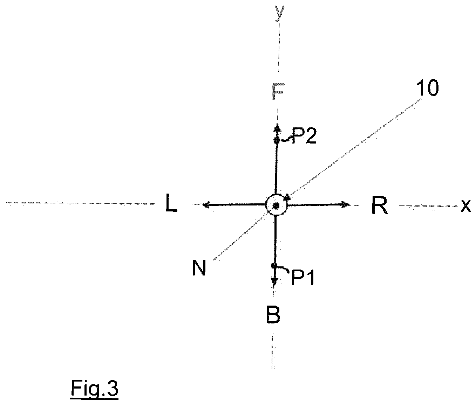

Die Figur 3 zeigt eine schematische Darstellung der Bewegungsmöglichkeiten des Steuerknüppels 10 in der Draufsicht. Der Steuerknüppel 10 ist als zweiachsiger Joystick ausgebildet. Mit Bewegungen, also Auslenkungen, des Steuerknüppels 10 in der Längsrichtung y können Zielwerte für die Fahrtrichtung und Fahrgeschwindigkeit in Vorwärtsrichtung F und Rückwärtsrichtung B vorgegeben werden. Das Fahrzeug beschleunigt auf den vorgegebenen Zielwert beziehungsweise wird bei einem elektrischen Fahrantrieb insbesondere generatorisch abgebremst. Mit Bewegungen, also Auslenkungen, des Steuerknüppels 10 in der Querrichtung x kann ein Zielwert für den Lenkwinkel des Fahrzeugs in eine linksseitige Richtung L und eine rechtsseitige Richtung R vorgegeben werden.

Im normalen Betrieb kann der Steuerknüppel 10, um zu bremsen, in die der aktuellen Fahrtrichtung F, B entgegengesetzte Richtung B, F oder in die Neutralstellung N bewegt werden, wodurch eine generatorische, also elektrische, Bremsung mittels des elektrischen Fahrantriebs eingeleitet wird. Um die als Betriebsbremse definierte mechanische Bremsfunktion auszuführen, die funktional sicher und mit ausreichend kurzem Bremsweg erfolgt, wird der Steuerknüppel 10 zu einer definierten Auslenkung, die die maximal mögliche Auslenkung beträgt, in die der aktuellen Fahrtrichtung F, B entgegengesetzten Richtung B, F bewegt und ein dort vorhandener deutlich spürbarer Druckpunkt P1, P2 überwunden. In diesem Fall wird der elektrische Fahrantrieb deaktiviert und die mechanische Bremsfunktion mit maximal möglicher oder der aktuellen Geschwindigkeit angepassten Bremskraft eingeleitet. Der Fahrer kann dann durch Zurücknahme der Auslenkung des Steuerknüppels 10 die Bremskraft der mechanischen Bremsfunktion gegenüber der maximal möglichen Stärke nach Wunsch einregeln. Anders als bei einer Auslenkung des Steuerknüppels 10 ohne Überwindung des Druckpunktes P1, P2 erfolgt nach Stillstand des Fahrzeugs kein Reversieren (Beschleunigung in die entgegengesetzte Richtung), sondern das Fahrzeug bleibt solange stehen, bis der Steuerknüppel 10 in die Neutralstellung N bewegt wurde. Danach ist der Bremsvorgang beendet und das Fahrzeug kann wieder beschleunigt werden. Alternativ kann der Druckpunkt P1, P2 auch so ausgeführt werden, dass der Steuerknüppel 10 nicht von alleine wieder in die Neutralstellung N zurückgeht, sondern der Druckpunkt P1, P2 wieder aktiv überwunden werden muss.

Wird der Druckpunkt P1, P2 des Steuerknüppels in der Richtung F, B der aktuellen Fahrgeschwindigkeit überwunden, kann entweder keine Funktion oder eine Boostfunktion mit temporär gesteigerter Beschleunigungsleistung ausgelöst werden.

Eine andere Alternative besteht darin, dass der Druckpunkt P1, P2 in Richtung der aktuellen Fahrtrichtung deaktiviert wird.

## Patentansprüche

1. Verfahren zur Fahrzeugführung einer mobilen Arbeitsmaschine (1), insbesondere eines Flurförderzeugs, mittels eines mindestens einachsigen, mit der Hand des Fahrers bewegbaren, Steuerknüppels (10), wobei mit einer Bewegung des Steuerknüppels (10) in einer Betätigungsrichtung (y) Zielwerte für Fahrtrichtung (F, B) und Fahrgeschwindigkeit der mobilen Arbeitsmaschine (1) vorgegeben werden, **dadurch gekennzeichnet, dass** mit einer vordefinierten Bremsbefehl-Bewegung des Steuerknüppels (10) in die der aktuellen Fahrtrichtung (F, B) entgegengesetzten Richtung (B, F) bis zur maximal möglichen Auslenkung des Steuerknüppels (10) eine als Betriebsbremse definierte mechanische Bremsfunktion eingeleitet wird.

2. Verfahren nach Anspruch 1, **dadurch gekennzeichnet, dass** mit der vordefinierten Bremsbefehl-Bewegung der Fahrantrieb der mobilen Arbeitsmaschine (1) deaktiviert wird.

3. Verfahren nach Anspruch 1 oder 2, **dadurch gekennzeichnet, dass** mit der vordefinierten Bremsbefehl-Bewegung die als Betriebsbremse definierte mechanische Bremsfunktion mit maximal möglicher Bremskraft eingeleitet wird.

4. Verfahren nach Anspruch 1 oder 2, **dadurch gekennzeichnet, dass** mit der vordefinierten Bremsbefehl-Bewegung die als mechanische Betriebsbremse definierte Bremsfunktion mit einer der aktuellen Fahrgeschwindigkeit angepassten Bremskraft eingeleitet wird.

5. Verfahren nach Anspruch 3 oder 4, **dadurch gekennzeichnet, dass** durch Zurücknahme der Steuerknüppel-Auslenkung nach der vordefinierten Bremsbefehl-Bewegung die Bremskraft der als Betriebsbremse definierten mechanischen Bremsfunktion variabel eingeregelt wird.

6. Verfahren nach einem der Ansprüche 1 bis 5, **dadurch gekennzeichnet, dass** die vordefinierte Bremsbefehl-Bewegung ein Überwinden eines spürbaren Druckpunkts (P1, P2) umfasst.

7. Verfahren nach einem der Ansprüche 1 bis 6, **dadurch gekennzeichnet, dass** die vordefinierte Bremsbefehl-Bewegung eine Bewegung mit vorgegebener Auslenkungsgeschwindigkeit und/oder eine ruckartige Bewegung und/oder eine Bewegung mit vorgegebener Betätigungskraft umfasst.

8. Verfahren nach einem der Ansprüche 1 bis 7, **dadurch gekennzeichnet, dass** mit einer vordefinierten Bremsbefehl-Bewegung des Steuerknüppels in der aktuellen Fahrtrichtung (F, B) keine Funktion ausgelöst wird.

9. Verfahren nach einem der Ansprüche 1 bis 7, **dadurch gekennzeichnet, dass** mit einer vordefinierten Bremsbefehl-Bewegung des Steuerknüppels in der aktuellen Fahrtrichtung (F, B) eine Boost-Funktion mit temporär gesteigerter Beschleunigungsleistung der mobilen Arbeitsmaschine (1) ausgelöst wird.

10. Mobile Arbeitsmaschine (1), insbesondere Flurförderzeug, zur Durchführung eines Verfahrens nach einem der Ansprüche 1 bis 9 mit einem mindestens einachsigen, mit der Hand des Fahrers bewegbaren, Steuerknüppel (10) und einer elektronischen Fahrzeugsteuerungseinheit (11) zur Auswertung und Umsetzung von Steuerbefehlen, die durch die Bewegungen des Steuerknüppels (10) auslösbar sind, wobei mit einer Bewegung des Steuerknüppels (10) in einer Betätigungsrichtung (y) Zielwerte für Fahrtrichtung (F, B) und Fahrgeschwindigkeit der mobilen Arbeitsmaschine (1) vorgebbar sind, **dadurch gekennzeichnet, dass** die Fahrzeugsteuerungseinheit (11) dazu eingerichtet ist, bei einer vordefinierten Bremsbefehl-Bewegung des Steuerknüppels (10) in die der aktuellen Fahrtrichtung (F, B) entgegengesetzten Richtung (B, F) bis zur maximal möglichen Auslenkung des Steuerknüppels (10) eine als Betriebsbremse definierte mechanische Bremsfunktion einzuleiten.

11. Mobile Arbeitsmaschine nach Anspruch 10, **dadurch gekennzeichnet, dass** der Steuerknüppel (10) mit einer Druckpunkt-Funktion ausgestattet ist, wobei bei Überwinden des Druckpunkts mit der Bremsbefehl-Bewegung in die der aktuellen Fahrtrichtung entgegengesetzten Richtung die als Betriebsbremse definierte mechanische Bremsfunktion auslösbar ist.

12. Mobile Arbeitsmaschine nach Anspruch 10 oder 11, **dadurch gekennzeichnet, dass** der Steuerknüppel (10) als zweiachsiger, mit der Hand des Fahrers bewegbarer, Steuerknüppel (10) ausgebildet ist, wobei mit einer Bewegung des Steuerknüppels (10) in einer Längsrichtung (y) Zielwerte für Fahrtrichtung (F, B) und Fahrgeschwindigkeit und mit einer Bewegung des Steuerknüppels (10) in einer Querrichtung (x) ein Zielwert für einen Lenkwinkel der mobilen Arbeitsmaschine (1) vorgegeben werden.

## Claims

1. Method for vehicle guidance of a mobile working machine (1), in particular an industrial truck, by means of an at least single-axis joystick (10) which can be moved by way of the hand of the driver, target values for the driving direction (F, B) and driving speed of the mobile working machine (1) being predetermined by way of a movement of the joystick (10) in an actuating direction (y), **characterized in that** a mechanical brake function which is defined as a service brake is initiated by way of a predefined brake command movement of the joystick (10) in the direction (B, F) opposite to the current driving direction (F, B) up to the maximum possible deflection of the joystick (10).

2. Method according to Claim 1, **characterized in that** the propulsion drive of the mobile working machine (1) is deactivated by way of the predefined brake command movement.

3. Method according to Claim 1 or 2, **characterized in that** the mechanical brake function which is defined as a service brake is initiated with a maximum possible brake force by way of the predefined brake command movement.

4. Method according to Claim 1 or 2, **characterized in that** the mechanical brake function which is defined as a service brake is initiated with a brake force which is adapted to the current driving speed by way of the predefined brake command movement.

5. Method according to Claim 3 or 4, **characterized in that** the brake force of the mechanical brake function which is defined as a service brake is adjusted in a variable manner by way of cancellation of the joystick deflection after the predefined brake command movement.

6. Method according to one of Claims 1 to 5, **characterized in that** the predefined brake command movement comprises overcoming a perceptible pressure point (P1, P2).

7. Method according to one of Claims 1 to 6, **characterized in that** the predefined brake command movement comprises a movement with a predetermined deflection speed and/or an abrupt movement and/or a movement with a predetermined actuating force.

8. Method according to one of Claims 1 to 7, **characterized in that** no function is triggered by way of a predefined brake command movement of the joystick in the current driving direction (F, B).

9. Method according to one of Claims 1 to 7, **characterized in that** a boost function with a temporarily increased acceleration power of the mobile working machine (1) is triggered by way of a predefined brake command movement of the joystick in the current driving direction (F, B).

10. Mobile working machine (1), in particular industrial truck, for carrying out a method according to one of Claims 1 to 9 with an at least single-axis joystick (10) which can be moved by way of the hand of the driver, and with an electronic vehicle control unit (11) for the evaluation and implementation of control commands which can be triggered by way of the movements of the joystick (10), target values for the driving direction (F, B) and driving speed of the mobile working machine (1) being predeterminable by way of a movement of the joystick (10) in an actuating direction (y), **characterized in that** the vehicle control unit (11) is configured to initiate a mechanical brake function which is defined as a service brake in the case of a predefined brake command movement of the joystick (10) in the direction (B, F) opposite to the current driving direction (F, B) up to the maximum possible deflection of the joystick (10).

11. Mobile working machine according to Claim 10, **characterized in that** the joystick (10) is equipped with a pressure point function, it being possible for the mechanical brake function which is defined as a service brake to be triggered in the case of the pressure point being overcome by way of the brake command movement in the direction opposite to the current driving direction.

12. Mobile working machine according to Claim 10 or 11, **characterized in that** the joystick (10) is configured as a biaxial joystick (10) which can be moved by way of the hand of the driver, target values for the driving direction (F, B) and the driving speed being predetermined by way of a movement of the joystick (10) in an actuating direction (y), and a target value for a steering angle of the mobile working machine (1) being predetermined by way of a movement of the joystick (10) in a transverse direction (x).

## Revendications

1. Procédé de guidage de véhicule d'une machine de travail mobile (1), notamment d'un chariot de manutention, au moyen d'un levier de commande (10) au moins à un axe, pouvant être déplacé avec la main du conducteur, des valeurs cibles pour la direction de marche (F, B) et la vitesse de marche de la machine de travail mobile (1) étant prescrites avec un déplacement du levier de commande (10) dans une direction d'actionnement (y), **caractérisé en ce qu'**une fonction de freinage mécanique définie comme frein de service est initiée avec un déplacement d'instruction de freinage prédéfini du levier de commande (10) dans la direction (B, F) opposée à la direction de marche actuelle (F, B) jusqu'à la déviation maximale possible du levier de commande (10).

2. Procédé selon la revendication 1, **caractérisé en ce que** le déplacement d'instruction de freinage prédéfini désactive l'entraînement de marche de la machine de travail mobile (1).

3. Procédé selon la revendication 1 ou 2, **caractérisé en ce que** le déplacement d'instruction de freinage prédéfini initie la fonction de freinage mécanique définie comme frein de service avec une force de freinage maximale possible.

4. Procédé selon la revendication 1 ou 2, **caractérisé en ce que** le déplacement d'instruction de freinage prédéfini initie la fonction de freinage définie comme frein de service mécanique avec une force de freinage adaptée à la vitesse de marche actuelle.

5. Procédé selon la revendication 3 ou 4, **caractérisé en ce que** la force de freinage de la fonction de freinage mécanique définie comme frein de service est réglée de manière variable par réduction de la déviation du levier de commande après le déplacement d'instruction de freinage prédéfini.

6. Procédé selon l'une quelconque des revendications 1 à 5, **caractérisé en ce que** le déplacement d'instruction de freinage prédéfini comprend un franchissement d'un point de pression perceptible (P1, P2).

7. Procédé selon l'une quelconque des revendications 1 à 6, **caractérisé en ce que** le déplacement d'instruction de freinage prédéfini comprend un déplacement à vitesse de déviation prescrite et/ou un déplacement saccadé et/ou un déplacement à force d'actionnement prescrite.

8. Procédé selon l'une quelconque des revendications 1 à 7, **caractérisé en ce qu'**aucune fonction n'est déclenchée avec un déplacement d'instruction de freinage prédéfini du levier de commande dans la direction de marche actuelle (F, B).

9. Procédé selon l'une quelconque des revendications 1 à 7, **caractérisé en ce qu'**un déplacement d'instruction de freinage prédéfini du levier de commande dans la direction de marche actuelle (F, B) déclenche une fonction de boost avec une puissance d'accélération temporairement augmentée de la machine de travail mobile (1) .

10. Machine de travail de travail mobile (1), notamment chariot de manutention, pour la mise en œuvre d'un procédé selon l'une quelconque des revendications 1 à 9, avec un levier de commande (10) au moins à un axe, déplaçable avec la main du conducteur, et une unité de commande de véhicule électronique (11) pour l'évaluation et la conversion d'instructions de commande, qui peuvent être déclenchées par les déplacements du levier de commande (10), des valeurs cibles pour la direction de marche (F, B) et la vitesse de marche de la machine de travail mobile (1) pouvant être prescrites avec un déplacement du levier de commande (10) dans une direction d'actionnement (y), **caractérisée en ce que** l'unité de commande de véhicule (11) est adaptée pour initier une fonction de freinage mécanique définie comme frein de service lors d'un déplacement d'instruction de freinage prédéfini du levier de commande (10) dans la direction (B, F) opposée à la direction de marche actuelle (F, B) jusqu'à la déviation maximale possible du levier de commande (10).

11. Machine de travail mobile selon la revendication 10, **caractérisée en ce que** le levier de commande (10) est équipé d'une fonction de point de pression, la fonction de freinage mécanique définie comme frein de service pouvant être déclenchée lors d'un franchissement du point de pression avec le déplacement d'instruction de freinage dans la direction opposée à la direction de marche actuelle.

12. Machine de travail mobile selon la revendication 10 ou 11, **caractérisée en ce que** le levier de commande (10) est réalisé sous forme de levier de commande (10) à deux axes, pouvant être déplacé avec la main du conducteur, des valeurs cibles pour la direction de marche (F, B) et la vitesse de marche étant prescrites avec un déplacement du levier de commande (10) dans une direction longitudinale (y) et une valeur cible pour un angle de braquage de la machine de travail mobile (1) étant prescrite avec un déplacement du levier de commande (10) dans une direction transversale (x).
